## Europäisches Patentamt
## European Patent Office
## Office européen des brevets

(11) Veröffentlichungsnummer: **0 149 803**
**B1**

(12) **EUROPÄISCHE PATENTSCHRIFT**

(45) Veröffentlichungstag der Patentschrift: **05.09.90**

(51) Int. Cl.⁵: **G 06 J 1/00**

(21) Anmeldenummer: **84115591.4**

(22) Anmeldetag: **17.12.84**

(54) **1 Bit/1 Bit-Digitalkorrelator.**

(30) Priorität: **20.01.84 DE 3401944**

(43) Veröffentlichungstag der Anmeldung:
**31.07.85 Patentblatt 85/31**

(45) Bekanntmachung des Hinweises auf die
Patenterteilung:
**05.09.90 Patentblatt 90/36**

(84) Benannte Vertragsstaaten:
**CH DE GB IT LI NL**

(56) Entgegenhaltungen:
**GB-A-2 016 246
US-A-3 517 879**

**MEDICAL & BIOLOGICAL ENGINEERING &
COMP., Band 17, Nr. 4, Juli 1979, Seiten 443-448,
Stevenage, GB; F.J. TAYLOR et al.: "Aneurysm
detection using one-bit correlation"**

(73) Patentinhaber: **Siemens Aktiengesellschaft
Wittelsbacherplatz 2
D-8000 München 2 (DE)**

(72) Erfinder: **Sebald, Georg, Dipl.-Ing.
Marienstrasse 2
D-8000 München 2 (DE)**
Erfinder: **Nist, Alfred, Dipl.-Ing.
Knegstrasse 4
D-8082 Grafrath (DE)**

## Beschreibung

Die Erfindung bezeiht sich auf einen 1 Bit/1 Bit-Digitalkorelator mit selbständig einstellender Integratorreferenzspannung, bestehend aus einem von einer Antivalenzschaltung (Exklusive-ODER-Gatter) gebildeten Multiplizierer, in dem zwei Digitalfolgen logisch miteinander verknüpft werden, und einem an diesen angeschalteten, als Analogteil aufgebauten Integrator. Eine derartiger Digitalkorrelator ist aus der GB—A—2 016 246 bekannt.

Zur Demodulation, Entzerrung und Regeneration eines quadraturamplitudenmodulierten Digitalsignals werden in mehreren Schaltungen Regelschleifen benötigt. Die Gewinnung der Stellspannungen der Regelglieder erfolgt häufig mit Hilfe von Korrelatoren, die die Korrelation zweier digitaler Bitströme mit Hilfe einer Antivalenzschaltung und eines Integrators ermitteln und daraus eine Stellspannung ableiten. Die Leistungsfähigkeit der Demodulations-, Entzerrungs- und Regenerationsschaltungen hängt stark von der Genauigkeit der Stellspannungen ab. Bei Schaltungen mit einer relativ großen Anzahl von Korrelationen, beispielsweise beim Einsatz eines adaptiven Basisentzerrers, ist es wichtig, eine kleine, einfache Schaltung zu erhalten, die die Stellspannung mit möglichst hoher Präzision, unabhängig von Exemplarstreuung, Temperaturdrift und Alterungserscheinung der Bauelemente erzeugt.

Der Erfindung liegt die Aufgabe zugrunde, eine in ihrem Aufbau kleine, einfache und präzise arbeitende Schaltung für einen Korrelator zu schaffen.

Diese Aufgabe wird gemäß der Erfindung durch eine Ausbildung des Korrelators entsprechend der im kennzeichnenden Teil des Anspruchs 1 angegebenen Weise gelöst.

Vorteilhafte Weiterbildungen und Ausgestaltungen des Erfindungsgegenstandes sind in den Unteransprüchen angegeben.

Nachstehend wird die Erfindung anhand eines in der Zeichnung dargestellten Ausführungsbeispiels erläutert.

Es zeigen

Fig. 1 einen Korrelator im Grundaufbau,

Fig. 2 ein Impulsdiagramm der Korrelatorsignale,

Fig. 3 eine Detaildarstellung des erfindungsgemäßen Korrelators und

Fig. 4 ein Zeitdiagramm für den Digitalteil des Korrelators.

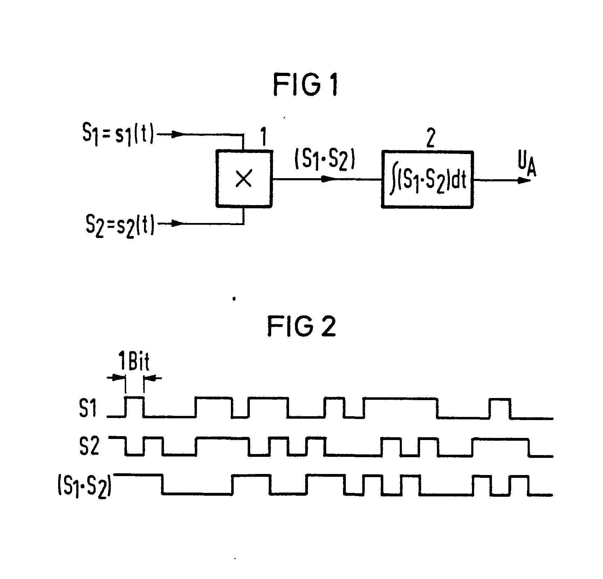

Ein Korrelator besteht, wie in Fig. 1 dargestellt, aus zwei Grundeinheiten, nämlich einem Multiplizierer 1 und einem Integrator 2. Dem Multiplizierer 1 werden die Signale $S1=s1(t)$ und $S2=s2(t)$ zugeführt und miteinander multipliziert. Besteht eine Abhängigkeit der beiden Signalverläufe voneinander, so liefert der nachfolgende Integrator 2 eine von der Anfangsspannung verschiedene Ausgangsspannung $U_A$. Ist keine Korrelation vorhanden, so wird das Produkt $S1 \cdot S2$ am Ausgang des Multiplizierers 1 ebenso häufig positiv wie negativ und die Ausgangsspannung des Integrators 2 schwankt um den Anfangswert. Wird die Ausgangsspannung auf einen Schaltungsteil geführt, der das Signal S1 und/oder S2 beeinflussen kann, so entsteht ein Regelkreis, dessen Regelziel es ist, die Korrelation zwischen den Signalen S1 und S2 aufzuheben.

Im dargestellten Fall sind die Signale S1 und S2 in Fig. 2 binäre Impulsfolgen, die in dem als Antivalenzschaltung (Exklusiv-ODER) aufgebauten Multiplizierer modolo 2 multipliziert werden.

Sind die Bitfolgen S1 und S2 nicht korreliert, z.B. echte Zufallsfolgen, so wird das Ergebnis der Antivalenzschaltung wieder eine Zufallsfolge mit gleicher Häufigkeit des Auftretens der log 1 und log 0 sein. Ist irgendein Zusammenhang zwischen den Informationseinheiten von S1 und S2 vorhanden, so wird sich das 0/1-Häufigkeitsverhältnis im Produkt verändern. Bei gleichphasiger Korrelation werden mehr Nullen als Einsen auftreten, bei gegenphasiger Korrelation ist es umgekehrt. Gibt man das Produkt auf einen Integrator, so wird dieser bei einem von 50% verschiedenen 0.1-Verhältnis in einer Richtung weglaufen. Das Integrationsergebnis soll dabei als Analogspannung vorliegen, mit der das Stellglied in der Regelschaltung verändert wird.

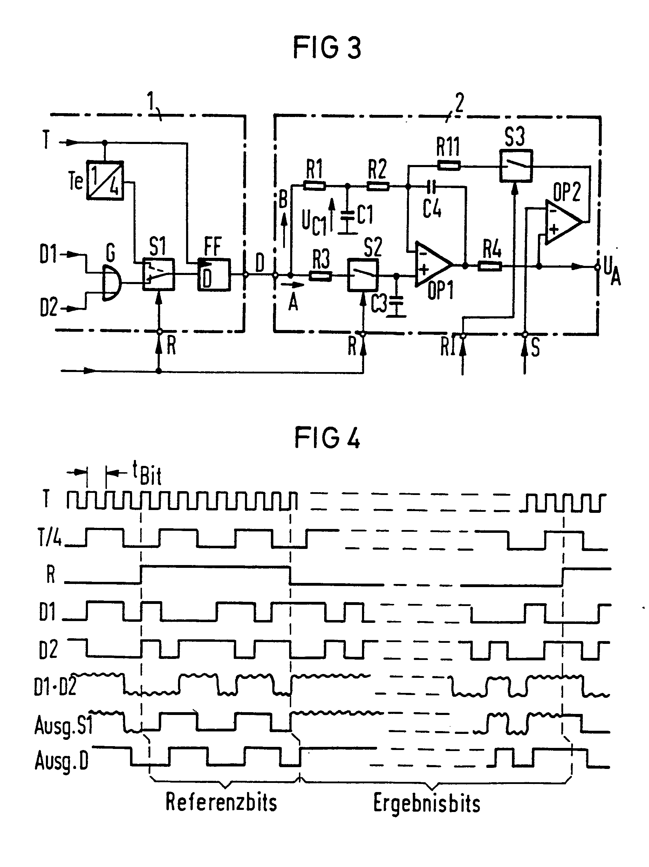

Der 1 Bit/1 Bit-Digitalkorrelator nach Fig. 3 besteht aus einem als Digitalteil aufgebauten Multiplizierer und einem diesem nachgeschalteten, als Analogteil aufgebauten Integrator. Der Multiplizierer 1 und der Integrator 2 sind jeweils innerhalb eines strichliert gezeichneten Kästchens angeordnet.

Der Digitalteil, der sich in einem Chip befindet, hat Eingänge für den Symboltakt T, die Digitalsignale D1 und D2 und ein Refresh-Kommando R (Die Refresh-Zyklen sind so ausgelegt, daß $t_{aus} \gg t_{ein}$ ist, beispielsweise ≈20ms Aus, ≈0,5ms Ein) sowie einen zum Analogteil führenden Ausgang D. Die beiden Digitalfolgen D1 und D2 werden in einem Exklusiv-ODER-Gatter G logisch verknüpft (modolo 2-Multiplikation). Die Bits laufen mit der Frequenz des Symboltaktes T ein. Durch eine 4:1-Teilung des Taktes im Teiler $T_e$ entsteht eine periodische "1—1—0—0"-Folge. Diese Bitfolge wird als Referenzsignal in bestimmten Abständen, nämlich jeweils bei Refresh-Kommando über einen digitalen Schalter S1 in das Multiplikationsergebnis eingeblendet. Das Schalterausgangssignal wird über ein Flip-Flop FF nochmals vom Symboltakt T abgetastet. Damit kann am Ausgang des Digitalteils nicht mehr zwischen Bits, die von der Referenzfolge stammen und originalen Ergebnisbits unterschieden werden. Die elektrischen Signalverläfe sind gleich.

In Fig. 4 ist ein Zeitdiagramm für den Digitalteil dargestellt. In einzelnen Zeilen untereinander sind der Takt T, der geteilte Takt T/4, das Refresh-Kommando R, die Digitalfolgen D1 und D2 sowie die Signalverläufe am Schalterausgang und am Ausgang D des Digitalteils eingezeichnet. Auf dem Signal D1·D2 ist zur Verdeutlichung der Wirkung des Abstast-Flip-Flops FF eine überlagerte Störspannung, und zwar nur auf den Ergebnisbits, eingezeichnet, die aber nicht mehr auf den Ausgang Flip-Flops durchkommt. Zur Vereinfachung der Skizze ist eine Refresh-Phase mit nur 8 Bit-Länge eingezeichnet. Diese Länge wird in der Praxis mehrere Tausend Bits lang sein.

Die während der Refresh-Phase anliegende Bitfolge dient zur Generierung der Integrator-Null-Referenzspannung. Sie soll den gleichen Gleichspannungs-Mittelwert wie eine Zufallsfolge mit 50% — 1/0 — Verhältnis haben. Diese wird dadurch erreicht, daß die Referenzbitfolge ( . . . 1—1—0—0—1—1—0—0 . . . ) folgende Merkmale aufweist: gleiche Häufigkeit von "1" und "0", gleiche Häufigkeit von positiven und negativen Flanken wie die oben definierte Zufallsfolge, identische elektrische Pegel für log "1" und log "0" bei den Ergebnis-Bits und den Referenz-Bits und identische Flanken-steilheit und Verzögerungszeiten bei Referenz- und Ergebnis-Bits.

Der als Analogteil aufgebaute Integrator, der im Hybrid-Modul realisiert ist, hat neben dem Eingang D für das Digitalsignal einen Eingang R für das Refresh-Signal sowie Eingänge S, RI zum Setzen der Integrator-Spannung bzw. zum Rücksetzen des Integrators. Der Ausgang $U_A$ liefert eine Analogspannung, die dem Integrationswert entspricht.

Das am Eingang D ankommende Digitalsignal wird im Integrator 2 auf zwei Wege A und B aufgespalten. Der Weg A, der zur Gewinnung der Integrator-Null-Referenz-Spannung dient, enthält einen bidirektionalen C-MOS-Schalter S2 und eine RC-Kombination aus einem Längswiderstand R3 und einem Kondensator C3 im Querzweig; er führt auf den nicht invertierenden Eingang des Operationsverstärkers OP1. Über den Längswiderstand und den bidirektionalen C-MOS-Schalter S2 erfolgt eine periodische Ausblendung der Referenzbitfolge vor dem Analog-Integrator auf den Halte-Kondensator C3, der unmittelbar am Referenzspannungseingang des Integrators liegt und der sich auf die Mittelwertspannung nur der Referenzfolge und nicht der Ergebnisbitfolge einstellt. Der C-MOS-Schalter S2 ist während der Refresh-Phase durchgeschaltet. Über die RC-Kombination wird der DC-Mittelwert der Referenzfolge gebildet. Nach Beendigung der Refresh-Phase wird der Schalter S2 wieder geöffnet, so daß die am Kondensator C3 anliegende Mittelwertspannung erhalten bleibt. Bedingung dazu ist, daß sich der Kondensator C3 nicht zwischen zwei Refresh-Zyklen entladen kann. Dies wird dadurch erreicht, daß zum einen der Schalter S2 einen sehr höhen Sperrwiderstand aufweist, was durch seine Ausbildung als bidirektionaler C-MOS-Schalter erreicht wird, und zum anderen der Eingang des nachfolgenden Operations-verstärkers OP1 einen sehr hohen Eingangswiderstand aufweist und die Eigenentladung des Kondensators C3 gering ist.

Bei der nächsten Referenzphase wird nur dann die Mittelspannung am Kondensator C3 nachgezogen, falls während des Einschaltvorgangs bei vorangegangenen Refreshphasen die Spannung am Kondensator C3 noch nicht ihren Endwert erreicht hatte, sich z.B. durch thermische Effekte die physikalischen Eigenschaften des Digitalsignals geändert haben oder durch sonstige Effekte (z.B. Eigenentladung) der Kondensator C3 seine Ladung verändert haben sollte.

Die Spannung am Kondensator C3 stellt also mit hogher Präzision diejenige Spannung dar, die eine binäre Zufallsfolge mit 50% — 1/0 — Verteilung als Gleichspannungsmittelwert enthält.

Der eigentliche Signalweg ist der Weg B. In diesem läuft das Digitalsignal zunächst über einen aus einem Widerstand R1 und einem Kondensator C1 gebildeten Tiefpaß, der einerseits die hohen Frequenzanteile des Digitalsignals abtrennen und andererseits nur den Gleichspannungsmittelwert des Digitalsignals herausfiltern soll. Der nachfolgende Widerstand R2 liegt mit einem Anschluß am invertierenden Eingang des Operationsverstärkers OP1 und damit an (virtueller) Masse. Der Teifpaß wird somit am Ausgang dauernd mit dem Widerstand R2 belastet. Seine Grenzfrequenz beträgt

$$\omega_g = C_1 \cdot \frac{R1 \cdot R2}{R1 + R2}$$

Wählt man den Widerstand R2 etwa um den Faktor 10 größer als R1, so geht er in die Grenzfrequenz praktisch nicht ein.

Die eigentliche Integration findet über eine RC-Kombination aus dem Widerstand R2 und einen Kondensator C4 zwischen dem Ausgang und dem invertierenden Eingang des Operations-verstärkers OP1 und dem Operationsverstärker OP1 selbst statt. Die Ausgangsspannung des Integrators ist

$$U_A = \frac{1}{R2 \cdot C4} \int_0^T U_{C1}(t)dt$$

Da die Spannung $U_{C1}$ am Kondensator C1 bereits vorgefiltert ist, genügt ein Operationsverstärker mit relativ geringer Bandbreite. Entscheidend ist, daß der Mittelwert von $U_{C1}$ aufintegriert wird, d.h., daß bereits möglichst geringe Abweichungen vom 50% — 1/0 — Verhältnis im Digitalsignal D aufintegriert werden.

Durch Anlegen des Refresh-Kommandos, wodurch man auf den Integrator nur die Referenzbitfolge schaltet, ergibt sich die Möglichkeit, den Integrationswert, d.h. eine bestimmte Integrator-Ausgangsspannung festzuhalten. Dies läßt sich dann sehr vorteilhaft ausnützen, wenn man in bestimmten Zeitfenstern die Ergebnis-Bits der modolo 2-Multiplikation ausblenden möchte, z.B. wenn diese nur Störinformation für die Korrelation enthalten.

Im Analogteil 2 mit dem Integrator ist ferner ein zweiter Operationsverstärker OP2 vorgesehen, dessen einer Eingang mit dem Ausgang des ersten Operationsverstärkers OP1 verbunden ist und an dessen zweiten Eingang (Setzeingang) die gewünschte Anfangsspannung angelegt wird. Der Ausgang des Operationsverstärkers OP2 ist über einen bidirectionalen Schalter S3 und einen Widerstand R11 mit dem invertierenden Eingang des ersten Operationsverstärkers OP1 verbunden. Dieser Schaltungsteil dient dem Rücksetzen des Integrators und soll nachfolgend erläutert werden.

Bei Beginn der Integrationszeit muß die Ausgangsspunnung des Integrators auf einen bestimmten DC-Wert gesetzt werden können. Die gewünschte Anfangsspannung wird an den Setzeingang S des Analogteils 2 angelegt. Der Operationsverstärkers OP2 wirkt als Komparator. Während des Setzvorganges ist der bidirektionale Schalter S3 geschlossen. Über den Widerstand R11 erfolgt die Rückkopplung auf den invertierenden Eingang des Operationsverstärkers OP1. Die Ausgangsspannung $U_A$ wird solange nachgeregelt, bis sie mit der Integratorsetzspannung übereinstimmt. Bei der Dimensionierung dieser Rückkopplung ist berücksichtigt, daß über den Digitaleingang D und den Tiefpaß ein Störsignal an den Operationsverstärker gelangt, das aber ebenfalls mitausgeregelt wird. Am Ende des Setzvorgangs wird der Schalter S3 geöffnet, der Integrationskondensator C4 hat die Anfangsspannung und der Integrationsvorgang beginnt.

Mit der erfindungsgemäßen Schaltung, die ohne Abgleichelemente auskommt, wird eine Unabhängigkeit des Integrationsergebnisses von Exemplarstreuung, Temperaturdrift und Alterserscheinung der Bauelemente erreicht. Außerdem ist das Intergrationsergebnis in weiten Grenzen von den Toleranzen der elektrischen Kennwerte der Bauelemente unabhängig. Die Schaltung ist zudem sehr platzsparend in inhrem Aufbau, sehr temperaturstabil und weist eine hohe Genauigkeit für die Integrator-Null-Lage auf.

**Patentansprüche**

1. 1 Bit/1 Bit-Digitalkorrelator mit selbständig einstellender Integrator-Referenzspannung, bestehend aus einem von einer Antivalenzschaltung (Exklusiv-ODER-Gatter) gebildeten Multiplizierer (1), in dem zwei Digitalfolgen (D1, D2) logisch miteinander verknüpft werden, und einem an diesen angeschalteten, als Analogteil aufgebauten Integrator (2), dadurch gekennzeichnet, daß in das Multiplikationsergebnis (Ergebnisbitfolge) über einen von einem Refresh-Kommando angesteuerten digitalen Schalter (S1) eine durch Teilung eines dem Digital-Korrelator zugeführten Symboltaktes entstandene Bitfolge als Referenzsignal in periodischen Abständen eingeblendet und das Schalterausgangssignal über ein Flip-Flop vom Symboltakt nochmals abgetastet wird und daß im Analogteil das ankommende Digitalsignal auf zwei Wege (A, B) aufgespalten wird, von denen der eine, der Gewinnung der Integrator-Null-Referenz-Spannung dienende Weg (A) einen weiteren, von einem Refresh-Kommando bidirektionalen C-Mos-Schalter (S2) enthält, der eine Widerstands-Kondensator-Kombination, bestehend aus einem Ohm'schen Widerstand (R3) im Längszweig und einem Kondensator (C3) im Querzweig verbindet, und auf den nicht invertierenden Eingang eines Operationsverstärkers (OP1) führt, und der andere, den Signalweg bildende Weg (B) einen aus einem Ohm'schen Widerstand (R1) und einem Kondensator (C1) gebildeten Tiefpaß enthält, der über einen weiteren Ohm'schen Widerstand (R2) mit dem invertierenden Eingang des Operationsverstärkers (OP1) verbunden ist, zwischen dessen invertierenden Eingang und Ausgang ein Kondensator (C4) angeschaltet ist, und zum Rücksetzen des Integrators (2) eine Rückkoppelschleife vom Ausgang zum invertierenden Eingang des Operationsverstärkers (OP1) vorgesehen ist, bestehend aus einem weiteren Operationsverstärker (OP2) dessen einer Eingang mit dem Ausgang des ersten Operationsverstärkers (OP1) verbunden ist und an dessen zweiten Eingang (Setzeingang) die gewünschte Anfangsspannung angelegt wird und dessen Ausgang über einen entsprechend der anliegenden Setzspannung gesteuerten, bidirectionalen C-Mos-Schalter (S3) und einen Widerstand (R11) mit dem invertierenden Eingang des ersten Operationsverstärkers (OP1) verbunden ist.

2. 1 Bit/1 Bit-Digitalkorrelator nach Anspruch 1, dadurch gekennzeichnet, daß der Operationsverstärker (OP1) einen sehr hohen Eingangswiderstand und geringen Offset im Vergleich zur Differenz der logischen Pegel aufweist.

3. 1 Bit/1 Bit-Digitalkorrelator nach Anspruch 1 oder 2, dadurch gekennzeichnet, daß der Kondensator (C3) im Querzweig eine geringe Eigenentladung aufweist.

4. 1 Bit/1 Bit-Digitalkorrelator nach Anspruch 1 bis 3, dadurch gekennzeichnet, daß die verwendete Referenzbitfolge aus dem durch 4 geteilten Symboltakt besteht (1—1—0—0—1—1—0—0 . . .).

**Revendications**

1. Corrélateur numérique du type à 1 bit/1 bit avec une tension de référence du corrélateur qui se règle automatiquement, constitué par un multiplicateur (1) constitué par un élément à anticoïncidence (circuit OU-exclusif) dans lequel deux suites numériques (D1, D2) sont combinées logiquement entre elles et par un intégrateur (2) qui lui est relié et qui est constitué sous la forme d'une partie analogique, caractérisé par le fait que l'on introduit à des intervalles périodiques dans le résultant de la multiplication (suite de bits du résultant), par l'intermédiaire d'un interrupteur numérique (S1) attaqué par une instruction de régénération, et comme signal de référence, une série de bits formée par la division d'une cadence-symbole appliquée au corrélateur numérique, le signal de sortie de l'interrupteur étant à nouveau échantillonné par la cadence-symbole, par l'intermédiaire d'une multivibrateur bistable, et que dans la partie analogique, le signal numérique qui arrive est subdivisé suivant deux voies (A, B) dont l'une comporte, pour l'obtention d'une voie (A) servant à la tension de référence nulle de l'intégrateur, un second interrupteur C-MOS (S2) bidirectionnel par une instruction de régénération, que relie une combinaison résistance-conducteur, constituée par une résistance ohmique (R3) située dans la branche longitudinal et par un condensateur (C3) situé dans la branche transversale et qui mène à l'entrée non-inverseuse d'un amplificateur opérationnel (OP1), et dont l'autre, qui forme la voie (B) pour les signaux, comporte un passebas, formé par une résistance ohmique (R1) et par un condensateur (C1), qui est relié par l'intermédiaire d'une autre résistance ohmique (R2), à l'entrée inverseuse de l'amplificateur opérationnel (OP1) entre l'entrée inverseuse et la sortie duquel est monté un condensateur (C4), et que pour la remise à l'état initial de l'intégrateur (2), il est prévu une boucle de contre-réaction de la sortie à l'entrée inverseuse de l'amplificatuer opérationnel (OP1), constituée par un second amplificateur opérationnel (OP2) dont une entrée est reliée à la sortie du premier amplificateur opérationnel (OP1) et à la seconde entrée duquel (entrée d'activation), est appliquée la tension initiale souhaitée, et dont la sortie est reliée à l'entrée inverseuse du premier amplificateur opérationnel (OP1), par l'intermédiare d'un interrupteur C-MOS bidirectionnel (S3) commandé en fonction de la tension d'activation appliquée, et d'une résistance (R11).

2. Corrélateur numérique du type à 1 bit/1 bit, selon la revendication 1, caractérisé par le fait que l'amplificateur opérationnel (OP1) possède une résistance propre très élevée et un offset faible comparativement à la différence des niveaux logiques.

3. Corrélateur numérique du type à 1 bit/1 bit selon la revendication 1 ou 2, caractérisé par le fait que le condensateur (C3) dans la branche transversale comporte une faible charge propre.

4. Corrélateur numérique du type à 1 bit/1 bit selon la revendication 1 à 3, caractérisé par le fait que la suite des bits de référence qui est utilisée est constituée par la cadence-symbole divisée par 4 (1—1—0—0—1—1—0—0 ...).

**Claims**

1. 1 bit/1 bit digital correlator with automatically setting integrator reference voltage, consisting of a multiplier (1), formed by an onequivalence circuit (exclusive-OR gate), in which two digital sequences (D1, D2) are logically combined with one another, and of an integrator (2), constructed as analog component part connected thereto, characterized in that a bit sequence generated by division of a symbol clock pulse fed to the digital correlator is blended at periodic intervals as reference signal into the multiplication result (result bit sequence) via a digital switch (S1) controlled by a refresh command, and the switch output signal is scanned once again by the symbol clock pulse via a flipflop, and in that the incoming digital signal is branched onto two paths (A, B) in the analog component part, of which one path (A), serving to acquire the integrator zero-reference voltage, contains a further bidirectional CMOS switch (S2), which is controlled by a refresh command, connects a resistor/capacitor combination consisting of an ohmic resistor (R3) in the series arm and a capacitor (C3) in the shunt arm, and leads to a non-inverting input of an operational amplifier (OP1), and the other path (B), forming the signal path, contains a low-pass filter, formed from an ohmic resistor (R1) and a capacitor (C1), which is connected via a further ohmic resistor (R2) to the inverting input of the operational amplifier (OP1), between the inverting input and output of which a capacitor (C4) is connected and for resetting the integrator (2) a feedback loop is provided from the output to the inverting input of the operational amplifier (OP1), which loop consists of a further operational amplifier (OP2), of which one input is connected to the output of the first operational amplifier (OP1), and to whose second input (setting input) the desired initial voltage is applied, and whose output is connected to the inverting input of the first operational amplifier (OP1) via a bidirectional CMOS switch (S3), controlled in accordance with the applied setting voltage, and a resistor (R11).

2. 1 bit/1 bit digital correlator according to Claim 1, characterized in that the operational amplifier (OP1) has a very high input independence and low offset in comparison to the difference between the logic levels.

3. 1 bit/1 bit digital correlator according to Claim 1 or 2, characterized in that the capacitor (C3) in the shunt arm has a low self-discharge.

4. 1 bit/1 bit digital correlator according to Claims 1 to 3, characterized in that the reference bit sequence employed consists of the symbol clock pulse divided by 4 (1—1—0—0—1—1—0—0 ...).

# FIG 1

$$S_1 = s_1(t) \longrightarrow$$

$$S_2 = s_2(t) \longrightarrow$$

1

$$\boxed{\times}$$

$(S_1 \cdot S_2)$

2

$$\boxed{\int (S_1 \cdot S_2) dt}$$

$U_A$

# FIG 2

1Bit

S1

S2

$(S_1 \cdot S_2)$

# FIG 3

# FIG 4

Referenzbits          Ergebnisbits